(19) Europäisches Patentamt European Patent Office Office européen des brevets

(11) EP 2 570 789 B1

(12) **EUROPEAN PATENT SPECIFICATION**

(45) Date of publication and mention
of the grant of the patent:
**02.03.2016 Bulletin 2016/09**

(51) Int Cl.:
***G01N 3/00*** *(2006.01)*

(21) Application number: **11425235.6**

(22) Date of filing: **13.09.2011**

(54) **Method for estimating the fatigue life of a rope**

Verfahren zur Berechnung der Lebensdauer eines Seils

Procédé pour estimer l'endurance d'une corde

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.03.2013 Bulletin 2013/12**

(73) Proprietor: **Redaelli Tecna S.p.A.
Divisione Teci
20135 Milano (MI) (IT)**

(72) Inventor: **Clerici, Franco
25073 Bovezzo (BS) (IT)**

(74) Representative: **Bruni, Giovanni
Laforgia, Bruni & Partners
Corso Duca degli Abruzzi, 78
10129 Torino (IT)**

(56) References cited:
• SCHEUNEMANN WOLFGANG: "Calculating the service life of steel wire ropes in elevators", INTERNET CITATION, 2 September 2009 (2009-09-02), pages 1-5, XP002669103, Retrieved from the Internet: URL:http://www.lift-report.de/index.php/news/257/360/Calculating-the-service-life-of-steel-wire-ropes-in-elevators [retrieved on 2012-02-08]
• WEHKING K-H: "MAGNETIC INDUCTIVE TESTING OF ELEVATOR ROPES", LIFT REPORT, VFZ VERLAG, DORTMUNT, DE, vol. 24, no. 6, 1 November 1998 (1998-11-01), pages 14,16-20,22, XP000788699, ISSN: 0341-3721
• R. VERREET: 'Calculating the service life of running steel wire ropes', [Online] 01 August 1998, Retrieved from the Internet: <URL:http://www.fastlift.co.za/pdf/CASAR%20-%20Calculating%20the%20service%20life%20of%20running%20steel%20wire%20ropes.pdf>

EP 2 570 789 B1

**Description**

The steel wire ropes are mechanical devices realized according to various configurations of a variable number of wires and strands, intended for the force transmission and movement in axial direction. While functioning, the rope is usually wound up on a winch, crosses then a series of components such for example rollers and sheaves and finally it is connected to the load to be moved. Inevitably, both the components intervening in the rope functioning and the stresses deriving from the applied loads, contribute to a progressive damaging caused by the rope wear, until a maximum level of permissible damage (discard criteria) is reached, beyond which the rope cannot be used anymore since it is no more able to function in a safe and efficient manner.

Usually, the number of sustainable bending cycles is estimated based on the Feyrer's formula, as illustrated in documents XP788699, XP2669103 or in the document "Calculating the service life of running steel wire ropes" by R. Verreet.

The possibility to provide a calculation formula which, based primarily on empirical measurement, is able to quantify the fatigue life of a rope, implies undoubtedly appreciable advantages, as for example:

- the possibility for a user to choose the most adapted to owns needs rope, and once the choice is made, to estimate the rope duration in ordinary conditions of use and load with a good precision level, besides supposing possible maintenance operations;
- the possibility, in the design step, to individuate and correct the possible system critical points;
- the possibility, after the rope installation, to individuate the points most subject to damaging, and to plan consequently possible targeted control and/or maintenance operations.

The solution described according to the present invention provides an estimation method, based on mainly empirical calculation parameters of the fatigue life of a rope; said method being applicable without limitations nearly to any kind of rope, only provided that some parameters need to be re-set.

From a working point of view the method, starting from input information connected to the system geometry, the load and the kind of the rope, allows to calculate the damage provided to the rope by each single system component with a good precision margin and, by virtue of the principle of effects overlapping to estimate the whole number of bends which the rope can resist to before reaching the discard criteria.

In particular, the damage caused to the rope by the single system components, i.e. the total bending loss of the rope, is determined by the product between the damage deriving from the same component geometry (bending loss due to geometry) and the one connected to the load (damage intensifier due to load). In this way, it is obtained that the reverse of the sum of the damage deriving from the single components determines the so called Estimated wire rope fatigue bends, i.e. the passage of every single portion of the rope across all the components constituting the system: on the basis of said result it is therefore possible to estimate the whole quality of the system and to estimate how long the rope will last before being substituted. It is clear that, since they are mainly empirical data, the more these data are exact and updated, the more the obtained result will be realistic and reliable.

So, the number obtained as result of the application of the proposed formula corresponds to the estimation of the number of passages which each portion of the rope can provide on every system component before reaching the end of its own fatigue life; this is not referred to the rope breaking point, but to the moment in which the same cannot be used anymore since it is no more in the conditions to satisfy the minimal parameters of safety and efficiency needed.

The operative features and the innovation of the method object of the present invention will be better highlighted in the following detailed description of the same, which refers to the drawing 1/1, where in particular:

- Figure 1 represents the winding angle around a component;
- figure 2 represents the maximum fleet angle of a certain component with respect to the preceding one;
- figure 3 represents the groove of a component and its relative total opening angle (groove opening angle);
- figure 4 represents the reverse winding distance (reverse bending length).

As previously stated, the method is based substantially on empirical data; more in particular, the input data consist in the following:

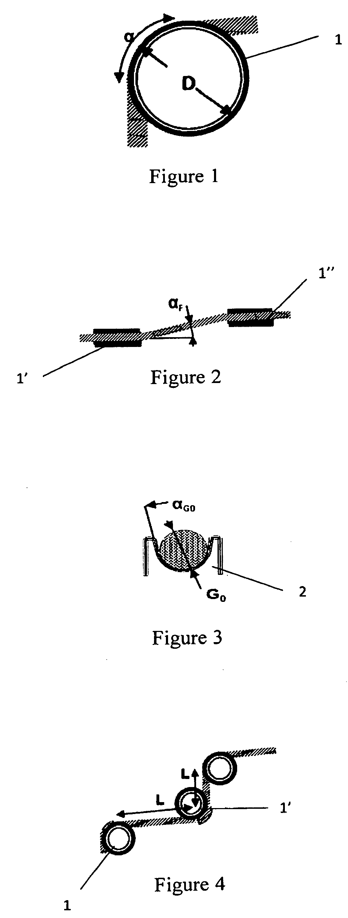

- d: nominal diameter of the rope expressed in mm;
- k: twisting coefficient of the rope, given by the ratio between the twisting pitch and the diameter;
- MBF: breaking load of the rope expressed in kN;
- F: load applied at each system component expressed in kN;
- geometry of the system components, i.e.:
- winding angle $\alpha$, expressed in degrees (°) and the diameter D of component 1, expressed in mm, from which it is possible to obtain the winding ratio d/D (figure 1);

- the maximum fleet angle $\alpha_F$ with respect to a previous component 1', or the next 1", expressed in degrees (figure 2);
- the opening angle $\alpha_{G0}$ of groove 2, expressed in degrees, as well as the diameter $G_0$ of the same groove 2, expressed in mm (figure 3);
- the reverse winding distance L, i.e. the distance between two components (1, 1') in case the front side of the rope becomes the back side of the next component 1', expressed in mm (figure 4). For the hypothesis in which the reverse value L is not available, it is taken $L = 10^8$.

The method functioning is schematized as follows:

Starting from the described input data, the parameters connected to the three main influence areas are calculated first, i.e.:

- the one due to the overload deriving from the system geometry;
- the one connected to the intrinsic features of the rope;
- the one deriving from the applied load.

The intrinsic features of the rope are substantially linked to the kind of structure and the needed breaking load, i.e. the parameters able to determine the resistance level as well as the efficiency deriving from the interaction level of the wires. The number of expected bends which would characterize the rope in laboratory condition is therefore estimated, assuming an optimal breaking load and a resistance level such that the efficiency is maximized; from the combination between the expected number of bends and the overload linked to the system geometry derives the geometry damage while from the combination between the optimal breaking load, optimal stress and inner friction derives the load damage intensifier factor.

The product between geometry damage ($D_{g1}$) and load damage intensifier ($D_{11}$) determines the total damage depending from each component 1 (damage of individual component - Di 0 $Dg_1$ x $Dl_1$).

The calculations described are then made in relation to each component 1 of the system: in the following, by virtue of the cited principle of effects overlapping it is obtained the measure of the whole damage by means of the reverse sum of the single damages which results in the total number of wire rope fatigue bends; as previously stated, this value corresponds to the number of passages which each portion of the rope is able to provide on each component 1 of the system before reaching the discard criteria.

By analyzing in detail the single calculations characterizing the method, in order to determine the overload deriving from the dimension of the grooves 2 (groove shape overload - $L_S$) it is needed firstly to proceed making the suitable corrections to the intervening geometry ratios between rope and components 1, considering also the possible presence of fleet angles $\alpha_F$ along the rope path; such a passage is needed since if the rope does not enter the component 1 in coincident direction to the symmetric axis of the groove 2, i.e. perpendicularly to the symmetric axis of the same component 1, the groove 2 will have a diameter d apparently wider than the real datum, thus consequently influencing the data relative to the reaction force and the provided damage.

Said result is obtained by means of the following passages:

$$d_x = \sin\!\left(\alpha_F \cdot \frac{\pi}{180}\right)$$

$$\frac{G}{d} = \frac{\left(\frac{G_0}{d}\right)_0}{1 + k_{10} \cdot d_x}$$

$$\alpha_G = \frac{\alpha_{G0}}{1 + k_{10} \cdot d_x}$$

$$k_c = 1 - \left(\frac{ABS(\alpha_G - 35)}{145}\right)^{1.25}$$

$$L_{s0} = \left(10 + k_1 \cdot \left(\frac{G}{d} - 1.1\right)^2 - 0.63 \cdot \left(2 - \frac{G}{d}\right)^2\right) \cdot \frac{k_c k_d}{2} + k_a - k_c \cdot k_d$$

$$L_S = 1 + \left(L_{s0} \cdot (1 + d_x) - 1\right) \cdot \left(\frac{\alpha}{D/d}\right)^{k_{11}}$$

Where:

| | |
|---|---|
| Dx: | increase in apparent diameter of the rope due to the fleet effect |
| G/d: | ratio between the diameter of the groove and of the rope corrected considering the fleet |
| $\alpha_G$: | groove angle corrected considering the fleet |
| $K_c$: | corrective coefficient |
| $L_{s0}$: | reference overload |
| $K_{10}$, $K_{11}$, $K_1$, $K_a$, $K_d$ = | corrective coefficients |

The overload due to the component dimension (Dimensional overload - $L_{D/d}$) indicates the damage connected to the different winding ratios between the rope and the component 1 of the system (bending ratio - D/d) and results from the following formula:

$$L_{D/d} = k_{13} \cdot \left(1 + 2 \cdot \frac{D}{d}^{-0.9} \cdot \left(\frac{\alpha}{D/d}\right)^{k_{11}}\right)$$

where $k_{11}$, $k_{13}$ are corrective coefficient The more this ratio is low, the more it means that the rope works in conditions of high bending angles.

The overload due to the winding (reverse bending overload - $L_{L/d}$) quantifies the rope damage when two components 1, 1' arranged at a close distance between each other, force the latter to change bending direction, with the consequence that the single components of the same rope (wire, strands) have to resist to very strong and with discordant direction bends. The reverse bending overload results from the following formula:

$$L_{L/d} = 1 + 100 \cdot \left(\frac{1.25}{L/d}\right)^2$$

The more intense the overload will be, the more reduced will be the distance between the two components.

The optimal breaking load $MBF_0$ corresponds wholly to the load of a rope having a valid compromise between the wires resistance and the ductility level: in fact, an extremely high resistance value leads undoubtedly to an advantage in terms of breaking load, but, since it implies an extreme reduction in wire ductility (and so little inclination to the stretching of the same) it is somewhat limiting for the whole fatigue life of the rope.

The number of expected bends n represents a value independent from both the whole system geometry and the applied load, depending conversely only from the kind of the rope; it derives from a combination between the optimal breaking load and the ideal number of bends which the rope provides in laboratory standard conditions:

$$MBF_0 = d^2 \cdot \left(1 - k_{14} \cdot \left(d/100\right)^2\right) \qquad n_0 = k_{15} \cdot 10^6/d$$

$$n = \left(\frac{MBF}{MBF_0}\right)^{1.25} \cdot n_0$$

where:

$N_0$ = ideal number of bends
$S_{14}$; $K_{15}$; coefficients

The stress of the rope T at each component 1 is determined by the ratio between the load applied to the rope and the efficiency of the component 1; this latter indicates the load losses due to the contact and the friction between the rope and the component 1, and depends from the pressures (in turn dependent from the winding ratio) generated by the overload due to the shape of the groove 2, to the winding angle $\alpha$ and to the load applied.

Where:

P = contact pressure between rope and system component
$\eta$ = efficiency of the component
$\alpha 1$ = base angle, corresponding to the winding of two rope pitches on the component
$\eta 1$ = efficiency corrected on the basis of the winding angle on the component
k12 = corrective angle linked to the winding angle on the component.

$$P = \frac{2F}{D/d \cdot d^2} L_s \qquad \alpha_1 = \frac{2 \cdot k \cdot 360}{\pi D/d}$$

$$\eta = 1 - 0.433 P$$

$$\eta_1 = 1 - (1 - \eta) \cdot (\alpha / \alpha_1)^{k_{12}}$$

$$T = F / \eta_1$$

The calculation of the force $F_b$ depends instead from the inner friction to the rope, deriving from the continuous contact between the single wires constituting it; therefore, it is observed how said damage deriving from the friction lasts also in the hypothesis that the rope is stressed minimally.

The calculations are made according to the following:

$$F_B = k_{16} \cdot \left( \frac{D}{d} \right)^{k_{17}} \cdot \frac{d^2}{1000}$$

Where:

$k_{16}$; $k_{17}$ are corrective coefficients.

The geometry damage $D_G$ is determined by the combination of the overloads previously determined, that is:

- total geometry overload ($D_{G1}$);
- reference geometry damage ($D_{G0}$);
- expected bends (n):

$$D_{G1} = 1.134928 \cdot L_S \cdot L_{D/d} \cdot L_{1/d}$$

$$D_{G0} = k_{18} D_{G1}^{3} - k_{19} D_{G1}^{2} + k_{20} D_{G1} - k_{21}$$

$$D_G = \frac{D_{G0}}{n}$$

where:
$K_{18...21}$ are corrective coefficients.

The intensifier due to the load $D_L$ is represented by a logarithmic function depending from the work coefficient (i.e. an indicator of how much the rope is stressed on the basis of its own breaking load) and it is expressed according to the following scheme:
Where:

$$W_F = \frac{MBF_0}{T + F_B}$$

$$D_L = \frac{1}{0.7785 \ln(W_F) - 0.2529}$$

| | |
|---|---|
| WF = | factor linked to the work load |
| $MBF_0$ = | optimal breaking load calculated at section 5.4 |
| T = | rope stress |
| $F_B$ = | frictional force |

Once the geometry damage and the intensifier due to the load are calculated, from the product of the two factors

$$D_i = D_{Gi} \cdot D_{Li}$$

it is possible to obtain the total damage for each component 1.

By means of the iteration of said calculation in relation to each component 1 and operating consequently the reverse of the sum of the single total damages, it is obtained the value relative to the duration of the rope expressed in number of bends, i.e. on the basis of the passages which the single portion of the rope can make along all the components before reaching the end of its own useful fatigue life:

$$N = \frac{1}{\sum Di}$$

As previously stated, said method can be applied in relation to any kind of rope provided that the various parameters are re-set suitably, according to the proper features of each single kind.

In view of the cited advantages in terms of possibility of individuation of the most critical points of the system, as well as of the sufficiently exact planning of the maintenance and control operations, it is therefore clear the whole advantage of the system deriving from the application of said method.

**Claims**

1. Method for estimating the fatigue life of a rope, able to allow the choice of structural and functional parameters of the rope on the basis of the number of passages of the rope across each component (1) of the working system, **characterized by** the following steps:

   a. calculation of the parameters connected to the three main influence areas: the overload deriving from the system geometry, the intrinsic features of the rope and the applied load;
   b. estimation of expected bends of the rope in laboratory conditions;
   c. estimation of stress and inner friction of the rope;
   d. combination between the expected number of bends and the overload linked to the system geometry derives the geometry damage $D_{gi}$;
   e. combination between the optima breaking load, optimal stress and inner friction derives the load damage intensifier factor $D_{li}$;
   f. product between geometry damage $D_{gi}$ and load damage $D_{li}$ determines the total damage depending on the single component (1);
   g. the calculations of steps a-f are made in relation to each component (1) of the system;
   h. a measure of the whole damage is obtained, by virtue of the principle of effects overlapping, by means of the reverse sum of the single damages, which results in the total number of wire rope fatigue bends the wire rope can undergo before reaching the discard criteria.

2. Method according to claim 1, **characterized in that** the value of the useful fatigue life of the rope, expressed in number of bends, is given by the reverse of the sum of the single damages provided by the single components (1) of the system, according to the following:

$$N = \frac{1}{\sum Di}$$

3. Method according to claim 1, **characterized in that** the damage depending from each component (1) $D_i$ is determined by the product between the geometry damage $Dg_1$, and the intensifier factor due to the load $Dl_1$, according to the following:

$$D_i = D_{Gi} \cdot D_{Li}$$

4. Method according to claim 1, **characterized in that** the overload due to the shape of the grooves (2) $L_S$ is determined according to the following:

$$d_x = \sin\left(\alpha_F \cdot \pi/180\right)$$

$$G/d = \frac{\left(G_0/d\right)_0}{1 + k_{10} \cdot d_x}$$

$$\alpha_G = \frac{\alpha_{G0}}{1 + k_{10} \cdot d_x}$$

$$k_c = 1 - \left(\frac{ABS(\alpha_G - 35)}{145}\right)^{1.25}$$

$$L_{S0} = \left(10 + k_1 \cdot \left(G/d - 1.1\right)^2 - 0.63 \cdot \left(2 - G/d\right)^2\right) \cdot \frac{k_c k_d}{2} + k_a - k_c \cdot k_d$$

$$L_S = 1 + \left(L_{S0} \cdot (1 + d_x) - 1\right) \cdot \left(\frac{\alpha}{D/d}\right)^{k_{11}}$$

where:

- $d_x$ represents the increase in apparent diameter of the rope due to the fleet effect
- G/d represents the ratio between the diameter of the groove and of the rope corrected considering the fleet
- $\alpha_G$ represents the groove angle corrected considering the fleet
- $k_c$ represents the corrective coefficient
- $L_{S0}$ represents the reference overload
- $k_{10}$, $k_{11}$, $k_1$, $k_a$, $k_d$ represent the corrective coefficients.

5. Method according to claim 1, **characterized in that** the overload due to the dimension of the single components (1) $L_{D/d}$ is determined according to the following:

$$L_{D/d} = k_{13} \cdot \left(1 + 2 \cdot D/d^{-0.9} \cdot \left(\frac{\alpha}{D/d}\right)^{k_{11}}\right)$$

where $k_{11}$ and $k_{13}$ are corrective coefficients.

6. Method according to claim 1, **characterized in that** the overload due to the winding $L_{L/d}$ is determined according to the following:

$$L_{L/d} = 1 + 100 \cdot \left(\frac{1.25}{L/d}\right)^2$$

7. Method according to claim 1, **characterized in that** the optimal breaking load $MBF_0$ is determined according to the following:

$$MBF_0 = d^2 \cdot \left(1 - k_{14} \cdot \left(\frac{d}{100}\right)^2\right)$$

$$n_0 = k_{15} \cdot \frac{10^6}{d}$$

$$n = \left(\frac{MBF}{MBF_0}\right)^{1.25} \cdot n_0$$

where $k_{14}$, $k_{15}$ are corrective coefficients.

8. Method according to claim 1, **characterized in that** the stress of the rope T and the frictional force Fb are determined according to the following:

$$P = \frac{2F}{\frac{D}{d} d^2} L_S$$

$$\alpha_1 = \frac{2 \cdot k \cdot 360}{\pi \frac{D}{d}}$$

$$\eta = 1 - 0.433P$$

$$F_B = k_{16} \cdot \left(\frac{D}{d}\right)^{k_{17}} \cdot \frac{d^2}{1000}$$

$$\eta_1 = 1 - (1 - \eta) \cdot (\alpha / \alpha_1)^{k_{12}}$$

$$T = F / \eta_1$$

Where:

- P represents the contact pressure between rope and system component
- $\eta$ represents the efficiency of the component
- $\alpha_1$ represents the base angle, corresponding to the winding of two rope pitches on the component
- $\eta_1$ represents the efficiency corrected on the basis of the winding angle on the component
- $k_{12}$ represents the corrective angle linked to the winding angle on the component
- $k_{16}$, $k_{17}$ are corrective coefficients.

9. Method according to claim 1, **characterized in that** the geometry damage Dg is determined according to the following:

$$D_{G1} = 1.134928 \cdot L_S \cdot L_{\frac{D}{d}} \cdot L_{\frac{L}{d}}$$

$$D_{G0} = k_{18} D_{G1}^3 - k_{19} D_{G1}^2 + k_{20} D_{G1} - k_{21}$$

$$D_G = \frac{D_{G0}}{n}$$

where:

- $D_{G1}$ represents the total geometry overload;

9

- $D_{G0}$ represents the reference geometry damage;
- n represents the number of expected bends;
- $k_{18...21}$ represent the corrective coefficients

**10.** Method according to claim 2, **characterized in that** the intensifier due to the load $D_L$ is determined according to the following:

$$W_F = \frac{MBF_0}{T + F_B}$$

$$D_L = \frac{1}{0.7785 \ln(W_F) - 0.2529}$$

where:

- WF represents the factor linked to the work load
- $MBF_0$ represents the optimal breaking load
- T represents the rope stress
- $F_B$ represents the frictional force.

**11.** Method according to any one of the preceding claims, **characterized in that** the input data are empirical parameters.

**12.** Method according to any one of the preceding claims, **characterized in that** it can be applied to any kind of rope, upon changing the input parameters and the corrective coefficients.

**Patentansprüche**

**1.** Verfahren zur Optimierung der Ermüdungslebensdauer eines Seiles, das in der Lage ist, die Auswahl der strukturellen und funktionalen Parameter des Seiles auf der Basis der Anzahl von Durchgängen des Seiles über jeder Komponente (1) des Arbeitssystems zu ermöglichen, **gekennzeichnet durch** die folgenden Schritte:

a. Berechnung der mit den drei Haupteinflussbereichen verbundenen Parameter: der Überlast, die aus der Systemgeometrie stammt, der intrinsischen Eigenschaften des Seiles und der aufgebrachten Last;
b. Schätzung des erwarteten Biegungen des Seiles in einer Laborbedingung;
c. Schätzung von einer Spannung und einer inneren Reibung des Seiles;
d. Kombination zwischen der erwarteten Anzahl von Biegungen und der mit der Geometrie des Systems verbundenen Überlast, die aus den Schäden ($D_{Gi}$) der geometrischen Form stammt;
e. Kombination zwischen dem optimalen Bruchlast, der optimalen Spannung und der inneren Reibung, die aus dem Verstärkerfaktor ($D_{Li}$) der Schäden der Last stammt;
f. Produkt zwischen dem Schaden ($D_{g1}$) der geometrischen Form und dem Verstärker ($D_{L1}$) der Schäden der Last, das in Abhängigkeit von der einzelnen Komponente (1) den Gesamtschaden ermittelt;
g. die Berechnungen der Schritte a-f werden mit Bezug auf jedem Teil (1) des Systems durchgeführt;
h. eine Messung des gesamten Schadens wird erreicht, wobei das Prinzip der einander überlappenden Effekte **durch** die inverse Summe der einzelnen Schäden verwendet wird, mit dem Ergebnis, dass die gesamte Zahl der Ermüdungsfalten des Drahtseils erreicht wird, die das Drahtseil vor dem Erreichen der Ablehnungskriterien ertragen kann,

**2.** Verfahren nach Anspruch 1, **dadurch gekennzeichnet, dass** der Wert des nützlichen Ermüdungslebensdauer des Seiles, ausgedrückt als die Anzahl der Biegungen, durch die Umkehrung der Summe der Einzelschäden von den einzelnen Komponenten (1) des Systems gebildet wird, wie folgt:

$$N = \frac{1}{\sum Di}$$

3. Verfahren nach Anspruch 1, **dadurch gekennzeichnet, dass** der in Abhängigkeit von jeder Komponente Di (1) verursachte Schaden durch das Produkt zwischen dem Schaden Dg1 der geometrischen Form und dem von der Last $D_{Li}$ verursachten Verstärkungsfaktor, wie folgt bestimmt wird:

$$D_i = D_{Gi} \cdot D_{Li}$$

4. Verfahren nach Anspruch I, **dadurch gekennzeichnet, dass** die von der Form der Rillen L5 (2) verursachte Überlast entsprechend den folgenden Kriterien bestimmt wird:

$$d_x = \sin\left(\alpha_F \cdot \frac{\pi}{180}\right)$$

$$G/d = \frac{\left(G_0/d\right)_0}{1 + k_{10} \cdot d_x}$$

$$\alpha_G = \frac{\alpha_{G0}}{1 + k_{10} \cdot d_x}$$

$$k_c = 1 - \left(\frac{ABS(\alpha_G - 35)}{145}\right)^{1.25}$$

$$L_{S0} = \left(10 + k_1 \cdot \left(G/d - 1.1\right)^2 - 0.63 \cdot \left(2 - G/d\right)^2\right) \cdot \frac{k_c k_d}{2} + k_a - k_c \cdot k_d$$

$$L_S = 1 + \left(L_{S0} \cdot (1 + d_x) - 1\right) \cdot \left(\frac{\alpha}{D/d}\right)^{k_{11}}$$

wobei

- $d_x$ ist für den Anstieg des scheinbaren Durchmessers des Seiles, der von dem Fleet Effect verursacht wird;
- G/d ist für das Verhältnis zwischen dem Durchmesser der Nut und des Seils, korrigiert unter Berücksichtigung der Fleet;
- $\alpha$G ist für den Rillenwinkel, korrigiert unter Berücksichtigung der Fleet;
- $k_c$ ist für den Korrekturkoeffizienten;
- $L_{s0}$, ist für den Referenzüberlast;
- $k_{10}$, $k_{11}$, $k_1$ e $K_d$ sind für die Korrekturkoeffizienten.

5. Verfahren nach Anspruch I, **dadurch gekennzeichnet, dass** die Überlast aufgrund der Abmessungen der einzelnen Komponenten $L_{D/d}$ (1) wird wie folgt bestimmt:

$$L_{D/d} = k_{13} \cdot \left(1 + 2 \cdot \frac{D}{d}^{-0.9} \cdot \left(\frac{\alpha}{\frac{D}{d}}\right)^{k_{11}}\right)$$

wobei $k_{11}$ und $k_{13}$ sind für Korrekturkoeffizienten.

6. Verfahren nach Anspruch 1, **dadurch gekennzeichnet, dass** die durch die Wicklung $L_{L/d}$ verursachte Überlast wird wie folgt bestimmt:

$$L_{L/d} = 1 + 100 \cdot \left(\frac{1.25}{\frac{L}{d}}\right)^2$$

7. Verfahren nach Anspruch 1, **dadurch gekennzeichnet, dass** die optimale Bruchbelastung $MBF_0$ wird wie folgt bestimmt:

$$MBF_0 = d^2 \cdot \left(1 - k_{14} \cdot \left(\frac{d}{100}\right)^2\right) \qquad n_0 = k_{15} \cdot \frac{10^6}{d}$$

$$n = \left(\frac{MBF}{MBF_0}\right)^{1.25} \cdot n_0$$

wobei k14, k15 sind für Korrekturkoeffizienten.

8. Verfahren nach Anspruch I, **dadurch gekennzeichnet, dass** die Spannung des Seiles T und die Reibungskraft Fb wie folgt bestimmt werden:

$$P = \frac{2F}{\frac{D}{d}d^2} L_S \qquad \alpha_1 = \frac{2 \cdot k \cdot 360}{\pi \frac{D}{d}}$$

$$\eta = 1 - 0.433 P \qquad F_B = k_{16} \cdot \left(\frac{D}{d}\right)^{k_{17}} \cdot \frac{d^2}{1000}$$

$$\eta_1 = 1 - (1 - \eta) \cdot (\alpha / \alpha_1)^{k_{12}}$$

$$T = F / \eta_1$$

wobei:

- P ist für den Kontaktdruck zwischen Seil und Bauteil des Systems
- η ist für die Wirksamkeit des Bauteils
- α1 ist für den Basiswinkel, der der Windung von zwei Steigungen des Seiles an dem Bauteil entspricht;
- $\eta_1$ ist für die Wirksamkeit, korrigiert auf der Basis des Wicklungswinkels auf dem Bauteil;
- $k_{12}$ ist für den Korrekturwinkel, der mit dem Wicklungswinkel auf dem Bauteil verbunden ist;
- $k_{16}$, $k_{17}$ sind für Korrekturkoeffizienten.

9. Verfahren nach Anspruch I, **dadurch gekennzeichnet, dass** der geometrische Schaden wie folgt bestimmt wird:

$$D_{G1} = 1.134928 \cdot L_S \cdot L_{D/d} \cdot L_{L/d}$$

$$D_{G0} = k_{18} D_{G1}^{\ 3} - k_{19} D_{G1}^{\ 2} + k_{20} D_{G1} - k_{21}$$

$$D_G = \frac{D_{G0}}{n}$$

wobei

- DG$_1$ ist für die gesamte Überlast der Geometrie;
- DG$_0$ ist für den Schaden der Referenzgeometrie;
- n ist für die Anzahl der zu erwartenden Biegungen;
- k18...21 sind für die Korrekturkoeffizienten.

10. Verfahren nach Anspruch 2, **dadurch gekennzeichnet, dass** der Verstärker aufgrund der Last DL wie folgt bestimmt wird:

$$W_F = \frac{MBF_0}{T + F_B}$$

$$D_L = \frac{1}{0.7785 \ln(W_F) - 0.2529}$$

wobei:

- W$_F$ ist für den mit der Arbeitslast verbundenen Faktor
- MBF$_0$ ist für die optimale Brechungslast
- T ist für die Spannung des Seiles
- F$_B$ ist für die Reibungskraft.

11. Verfahren nach einem der vorhergehenden Ansprüche, **dadurch gekennzeichnet, dass** die Eingangsdaten empirische Parameter sind.

12. Verfahren nach einem der vorhergehenden Ansprüche, **dadurch gekennzeichnet, dass** es auf jede Art von Seil, durch eine Änderung der Eingangsparameter und die KorrekturKoeffizienten, verwendet werden kann.

**Revendications**

1.  Procédé pour optimiser la résistance à la fatigue d'une corde apte à permettre le choix des paramètres structuraux et fonctionnels de la corde sur la base du nombre de passages de la corde à travers chaque composant (1) du système de travail, **caractérisé par** les étapes suivantes:

    a. calcul des paramètres liés aux trois principales zones d'influence: la surcharge dérivant de la géométrie du système, les caractéristiques intrinsèques de la corde et la charge appliquée;
    b. estimation des plis prévus de la corde en condition de laboratoire;
    c. estimation de la contrainte et de la friction interne de la corde;
    d. la combinaison entre le nombre attendu de plis et la surcharge liée à la géométrie du système dérive la géométrie du dommage ($D_{Gi}$);
    e. la combinaison entre la charge de rupture optimale, la contrainte optimale et la friction intérieure dérive le facteur intensificateur ($D_{Li}$) des dommages de la charge ;
    f. le produit entre le dommage de la géométrie ($D_{g1}$) et l'intensificateur ($D_{Li}$) du dommage de la charge détermine le dommage total en fonction du composant unique (1);
    g. les calculs des opérations a-f sont faites avec référence à chaque composant (1) du système ;
    h. une mesure de l'entier dommage est obtenue en regard du principe des effets superposés, par une somme inverse des singles dommages, ce qui comporte le nombre total des plis de fatigue de la corde du fil, que la corde de fil peut supporter avant d'atteindre les critères de rejet.

2.  Procédé selon la revendication 1, **caractérisé en ce que** la valeur de la résistance à la fatigue utile de la corde, exprimée en nombre de plis, est donnée par l'inverse de la somme des dommages individuelles fournies par les composants individuels (1) du système, selon ce qui suit:

$$N = \frac{1}{\sum Di}$$

3.  Procédé selon la revendication 1, **caractérisé en ce que** le dommage en fonction de chaque composant (1) Di est déterminé par le produit entre la géométrie des dommages Dg1 et le facteur intensificateur dû à la charge $D_{Li}$, comme suit:

$$D_i = D_{Gi} \cdot D_{Li}$$

4.  Procédé selon la revendication 1, **caractérisé en ce que** la surcharge due à la forme des rainures (2) L5 est déterminé selon ce qui suit:

$$d_x = \sin\left(\alpha_F \cdot \pi/180\right)$$

$$G/d = \frac{\left(G_0/d\right)_0}{1 + k_{10} \cdot d_x}$$

$$\alpha_G = \frac{\alpha_{G0}}{1 + k_{10} \cdot d_x}$$

$$k_c = 1 - \left(\frac{ABS(\alpha_G - 35)}{145}\right)^{1.25}$$

$$L_{S0} = \left(10 + k_1 \cdot \left(G/d - 1.1\right)^2 - 0.63 \cdot \left(2 - G/d\right)^2\right) \cdot \frac{k_c k_d}{2} + k_a - k_c \cdot k_d$$

$$L_S = 1 + \left(L_{S0} \cdot \left(1 + d_x\right) - 1\right) \cdot \left(\frac{\alpha}{D/d}\right)^{k_{11}}$$

où:

- dx représente l'augmentation du diamètre apparent de la corde en raison de l' «effet flotte»
- G/d représente le rapport entre le diamètre de la rainure et de la corde corrigé compte tenu de la flotte
- $\alpha$G représente l'angle de la rainure corrigé compte tenu de la flotte
- $k_c$ représente le coefficient de correction
- $L_{s0}$ représente la surcharge de référence
- $k_{10}$, $k_{11}$, $k_1$, $k_a$ représentent les coefficients de correction.

**5.** Procédé selon la revendication 1, **caractérisé en ce que** la surcharge due à la dimension des composants individuels (1) $L_{D/d}$ est déterminée conformément à ce qui suit:

$$L_{D/d} = k_{13} \cdot \left(1 + 2 \cdot D/d^{-0.9} \cdot \left(\frac{\alpha}{D/d}\right)^{k_{11}}\right)$$

où $k_{11}$ et $k_{13}$ sont des coefficients de correction.

**6.** Procédé selon la revendication 1, **caractérisé en ce que** la surcharge due à l'enroulement $L_{L/d}$ est déterminée comme suit:

$$L_{L/d} = 1 + 100 \cdot \left(\frac{1.25}{L/d}\right)^2$$

**7.** Procédé selon la revendication 1, **caractérisé en ce que** la charge à la rupture optimale $MBF_0$ est déterminée comme suit:

$$MBF_0 = d^2 \cdot \left(1 - k_{14} \cdot \left(\frac{d}{100}\right)^2\right)$$

$$n_0 = k_{15} \cdot \frac{10^6}{d}$$

$$n = \left(\frac{MBF}{MBF_0}\right)^{1.25} \cdot n_0$$

où k14, k15 sont des coefficients de correction.

**8.** Procédé selon la revendication 1, **caractérisé en ce que** la sollicitation de la corde T et la force de frottement Fb sont déterminées selon ce qui suit:

$$P = \frac{2F}{\frac{D}{d} d^2} L_S$$

$$\alpha_1 = \frac{2 \cdot k \cdot 360}{\pi \frac{D}{d}}$$

$$\eta = 1 - 0.433 P$$

$$F_B = k_{16} \cdot \left(\frac{D}{d}\right)^{k_{17}} \cdot \frac{d^2}{1000}$$

$$\eta_1 = 1 - (1 - \eta) \cdot (\alpha / \alpha_1)^{k_{12}}$$

$$T = F / \eta_1$$

où:

- P représente la pression de contact entre la corde et les composants du système
- $\eta$ représente l'efficacité du composant
- $\alpha 1$ représente l'angle de base, correspondant à l'enroulement de deux pas de corde sur le composant
- $\eta_1$ représente le rendement corrigé sur la base de l'angle d'enroulement du composant
- $k_{12}$ représente l'angle de correction lié à l'angle d'enroulement sur le composant
- $k_{16}$, $k_{17}$ sont des coefficients de correction.

**9.** Procédé selon la revendication 1, **caractérisé en ce que** le dommage Dg de la géométrie est déterminé selon comme suit:

$$D_{G1} = 1.134928 \cdot L_S \cdot L_{D/d} \cdot L_{L/d}$$

$$D_{G0} = k_{18}D_{G1}^{\ 3} - k_{19}D_{G1}^{\ 2} + k_{20}D_{G1} - k_{21}$$

$$D_G = \frac{D_{G0}}{n}$$

où

- $DG_1$ représente la surcharge totale de la géométrie;
- $DG_0$ représente le dommage de la géométrie de référence;
- $\eta$ représente le nombre des plis prévus;
- $k18 ...21$ représentent les coefficients de correction.

**10.** Procédé selon la revendication 2, **caractérisé en ce que** l'intensificateur dû à la charge DL est déterminé comme suit:

$$W_F = \frac{MBF_0}{T + F_B}$$

$$D_L = \frac{1}{0.7785 \ln(W_F) - 0.2529}$$

où:

- $W_F$ représente le facteur lié à la charge de travail
- $MBF_0$ représente la charge de rupture optimale
- $T$ représente la contrainte de la corde
- $F_B$ représente la force frictionale.

**11.** Procédé selon l'une quelconque des revendications précédentes, **caractérisé en ce que** les données d'entrée sont des paramètres empiriques.

**12.** Procédé selon l'une quelconque des revendications précédentes, **caractérisé en ce qu'**il peut être applié à tout type de corde, quand on change les paramètres d'entrée et les coefficients de correction.

Figure 1

Figure 2

Figure 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. VERREET.** *Calculating the service life of running steel wire ropes*